# EUROPÄISCHE PATENTSCHRIFT

(11) **EP 1 530 745 B1**
(45) Veröffentlichungstag und Bekanntmachung des Hinweises auf die Patenterteilung: **23.01.2008**
(21) Anmeldenummer: 03792188.9
(22) Anmeldetag: 09.07.2003
(51) Int. Cl.: G03G 9/097, C09C 1/40, C09D 5/03, C08K 5/098, H01G 7/02, C01G 31/00

(54) **VERWENDUNG VON SALZEN SCHICHTARTIGER DOPPELHYDROXIDE ALS LADUNGSSTEUERMITTEL**
USE OF SALTS OF LAYERED DOUBLE HYDROXIDES AS CHARGE CONTROL AGENTS
EMPLOI DE SELS DE DOUBLES HYDROXYDES EN COUCHES EN TANT QU'AGENTS DE REGULATION DE LA CHARGE

(30) Priorität: 03.08.2002 DE 10235571
(43) Veröffentlichungstag der Anmeldung: 18.05.2005
(73) Patentinhaber: Clariant Produkte (Deutschland) GmbH, 65929 Frankfurt am Main (DE)
(72) Erfinder: MICHEL, Eduard, 79418 Schliengen (DE); BAUR, Rüdiger, 65817 Eppstein/Ts. (DE); MACHOLDT, Hans-Tobias, 64297 Darmstadt-Eberstadt (DE)
(86) Internationale Anmeldenummer: PCT/EP2003/007423
(87) Internationale Veröffentlichungsnummer: WO 2004/019137

(56) Entgegenhaltungen:
- EP-A- 0 957 407
- WO-A-99/35185
- US-A- 5 244 764
- US-A- 5 288 581
- US-A- 5 728 364
- US-A- 5 728 366

## Beschreibung

Die vorliegende Erfindung liegt auf dem Gebiet der Ladungssteuermittel im Sinne einer Komponente, die das elektrostatische Aufladungsverhalten in einer Matrix selektiv beeinflusst.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponentenentwickler genannt), darüber hinaus sind noch Spezialtoner, wie z.B. Magnettoner, Flüssigtoner oder Polymerisationstoner im Einsatz. Unter Polymerisationstonern sind solche Toner zu verstehen, die z.B. durch Suspensionspolymerisation (Kondensation) oder Emulsionspolymerisation entstehen und zu verbesserten Teilcheneigenschaften des Toners führen. Weiterhin sind auch solche Toner gemeint, die grundsätzlich in nicht-wässrigen Dispersionen erzeugt werden.

Ein Maß für die Tonerqualität ist seine spezifische Aufladung q/m (Ladung pro Masseeinheit). Neben Vorzeichen und Höhe der elektrostatischen Aufladung ist das schnelle Erreichen der gewünschten Ladungshöhe, die Konstanz dieser Ladung über einen längeren Aktivierzeitraum sowie die Unempfindlichkeit des Toners gegen Klimaeinflüsse, wie Temperatur und Luftfeuchtigkeit ein wichtiges Qualitätskriterium.
Sowohl positiv als auch negativ aufladbare Toner finden Verwendung in Kopierern und Laserdruckern in Abhängigkeit vom Verfahrens- und Gerätetyp.

Um elektrophotographische Toner oder Entwickler mit entweder positiver oder negativer Aufladung zu erhalten, werden häufig Ladungssteuermittel zugesetzt.

Da Tonerbindemittel oftmals eine starke Abhängigkeit der Aufladung von der Aktivierzeit aufweisen, ist es Aufgabe eines Ladungssteuermittels, zum einen Vorzeichen und Höhe der Toneraufladung einzustellen und zum anderen der Aufladungsdrift des Tonerbindemittels entgegenzuwirken und für Konstanz der Toneraufladung zu sorgen. Darüber hinaus ist für die Praxis wichtig, dass die Ladungssteuermittel eine ausreichende Thermostabilität und eine gute Dispergierbarkeit besitzen. Typische Einarbeitungstemperaturen für Ladungssteuermittel in die Tonerharze liegen bei Verwendung von Knetern oder Extrudern zwischen 100 und 200°C. Dementsprechend ist eine Thermostabilität von 200°C von großem Vorteil. Wichtig ist auch, dass die Thermostabilität über einen längeren Zeitraum (ca. 30 Minuten) und in verschiedenen Bindemittelsystemen gewährleistet ist.

Für eine gute Dispergierbarkeit ist es von Vorteil, wenn das Ladungssteuermittel keine wachsartigen Eigenschaften, keine Klebrigkeit und einen Schmelz- oder Erweichungspunkt von > 150°C, besser > 200°C, aufweist. Klebrigkeit führt häufig zu Problemen beim Zudosieren in die Tonerformulierung, und niedrige Schmelz- oder Erweichungspunkte können dazu führen, dass beim Eindispergieren keine homogene Verteilung erreicht wird, da sich das Material tröpfchenförmig im Trägermaterial zusammenschließt.

Typische Tonerbindemittel sind Polymerisations-, Polyadditions- und Polykondensationsharze wie Styrol-, Styrolacrylat-, Styrolbutadien-, Acrylat-, Polyester-, Phenol-Epoxidharze, sowie Cycloolefincopolymere, einzeln oder in Kombination, die noch weitere Inhaltsstoffe, z.B. Farbmittel, wie Farbstoffe und Pigmente, Wachse oder Fließhilfsmittel, enthalten können oder im Nachhinein zugesetzt bekommen können, wie hochdisperse Kieselsäuren.

Ladungssteuermittel können auch zur Verbesserung der elektrostatischen Aufladung von Pulvern und Lacken, insbesondere in triboelektrisch oder elektrokinetisch versprühten Pulverlacken, wie sie zur Oberflächenbeschichtung von Gegenständen aus beispielsweise Metall, Holz, Kunststoff, Glas, Keramik, Beton, Textilmaterial, Papier oder Kautschuk zur Anwendung kommen, eingesetzt werden. Der Pulverlack oder das Pulver erhält seine elektrostatische Aufladung im allgemeinen nach einem der beiden folgenden Verfahren:

Beim Corona-Verfahren wird der Pulverlack oder das Pulver an einer geladenen Corona vorbeigeführt und hierbei aufgeladen, beim triboelektrischen oder elektrokinetischen Verfahren wird vom Prinzip der Reibungselektrizität Gebrauch gemacht. Auch eine Kombination von beiden Verfahren ist möglich.
Der Pulverlack oder das Pulver erhalten im Sprühgerät eine elektrostatische Aufladung, die der Ladung des Reibungspartners, im allgemeinen ein Schlauch oder Sprührohr, beispielsweise aus Polytetrafluorethylen, entgegengesetzt ist.

Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Darüber hinaus ist gefunden worden, dass Ladungssteuermittel das Aufladungssowie das Ladungsstabilitätsverhalten von Elektretmaterialien, insbesondere Elektretfasern, erheblich verbessern können. Typische Elektretmaterialien basieren auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthaläten sowie Mischungen daraus. Elektretmaterialien, insbesondere Elektretfasern, können beispielsweise zur (Feinst-)Staubfiltration eingesetzt werden. Die Elektretmaterialien können ihre Ladung durch Corona- oder Triboaufladung erhalten.

Weiterhin können Ladungssteuermittel in elektrostatischen Trennvorgängen, insbesondere in Trennvorgängen von Polymeren verwendet werden. Ohne Ladungssteuermittel laden sich "Low Density Polyethylen (LDPE)" und "High Density Polyethylen" (HDPE) reibungselektrisch weitestgehend ähnlich auf. Nach Ladungssteuermittelzugabe laden sich LDPE stark positiv und HDPE stark negativ auf und lassen sich so gut trennen. Neben der äußerlichen Aufbringung der Ladungssteuermittel ist auch eine Einarbeitung derselben in das Polymer möglich, um beispielsweise ein Polymer innerhalb der triboelektrischen Spannungsreihe zu verschieben und eine entsprechende Trennwirkung zu erhalten. Ebenso lassen sich auf diese Weise andere Polymere wie z.B. Polypropylen (PP) und/oder Polyethylenterephthalat (PET) und/oder Polyvinylchlorid (PVC) voneinander trennen.

Auch Salzmineralien lassen sich trennen, wenn ihnen zuvor ein Mittel zugegeben wurde (Oberflächenkonditionierung), das die substratspezifische elektrostatische Aufladung verbessert.

Weiterhin werden Ladungssteuermittel als "Electroconductivity Providing Agents" (ECPA) (JP-05-163 449) in Tinten für Tintenstrahldrucker eingesetzt.
Außerdem sind die besagten Doppelhydroxide als Ladungssteuermittel in Farbfiltern für die additive oder subtraktive Farberzeugung, sowie in "Electronic Inks" für "Electronic Newspapers" geeignet.

Zusätzlich können Ladungssteuermittel zur Oberflächenmodifizierung von Free Flow Agents, wie hochdispersen Kieselsäuren in ihrer pyrogenen wie gefällten Form, oder Metalloxiden, wie Titandioxid, verwendet werden. Hierbei wird eine Optimierung der physikalischen Eigenschaften, wie reibungselektrischem Ladungsverhalten, bewirkt. Free Flow Agents werden nachträglich dem Toner zudosiert, um bessere Rieselfähigkeit zu erzeugen.

In der US-A-5,288,581 werden bestimmte Hydrotalcite als ladungssteuernde Additive eingesetzt.
In JP 10-090 941 wird die Verwendung eines hydrophobisierten Hydrotalcits als externes Additiv in Kombination mit einem positiven Ladungssteuermittel beschrieben. Dabei dient das Additiv primär zur Verbesserung der Rieselfähigkeit des Toners.

Die US-A-5 244 764 beschreibt die Verwendung von schichtartigen Doppelhydroxid-Salzen, in denen spezielle organische Anionen, wie Citrat, Oxalat, Salicylat oder Acetat enthalten sein können. als Ladungssteuermittel in Tonern und Entwicklern.
Die US-A-5 728 366 offenbart eine Methode zur Herstellung von Hydrotalciten mit eingelagerten organischen Anionen.

Aufgabe der vorliegenden Erfindung war es, wirksame und ökotoxikologisch verträgliche Ladungssteuermittel zu finden, die insbesondere eine hohe Schnellaufladung und hohe Ladungsstabilität aufweisen. Weiterhin sollten sie in verschiedenen praxisnahen Tonerbindemitteln wie Polyestern, Polystyrolacrylaten oder Polystyrolbutadienen/Epoxidharzen sowie Cycloolefincopolymeren gut und unzersetzt dispergierbar sein. Weiterhin sollte ihre Wirkung weitgehend unabhängig von der Harz/Carrier-Kombination sein, um eine breite Anwendung zu erschließen. Ebenso sollten sie in gängigen Pulverlack-Bindemitteln und Elektretmaterialien wie z.B. Polyester (PES), Epoxid, PES-Epoxyhybrid, Polyurethan, Acrylsystemen sowie Polypropylenen gut und unzersetzt dispergierbar sein.

Bezüglich ihrer elektrostatischen Effizienz sollten die Ladungssteuermittel bereits bei möglichst geringer Konzentration (1 % oder kleiner) wirksam sein und diese Effizienz in Verbindung mit Ruß oder anderen Farbmitteln nicht verlieren. Von Farbmitteln ist bekannt, dass sie die triboelektrische Aufladung von Tonern teilweise nachhaltig beeinflussen können.

Überraschenderweise hat sich nun gezeigt, dass nachstehend beschriebene Salze schichtartiger Doppelhydroxide vorteilhafte Ladungssteuereigenschaften insbesondere für negative Aufladung und hohe Thermostabilitäten besitzen, wobei die Ladungssteuereigenschaft weder durch Kombination mit Ruß oder anderen Farbmitteln verloren geht. Darüber hinaus sind die Verbindungen mit den üblichen Toner-, Pulverlack- und Elektretbindemitteln gut verträglich und lassen sich leicht dispergieren.

Gegenstand der vorliegenden Erfindung ist die Verwendung von schichtartigen Doppelhydroxid-Salzen als Ladungssteuermittel in elektrophotographischen Tonern und Entwicklern, in Pulverlacken, Elektretmaterialien und in elektrostatischen Trennvorgängen von aufladbaren Materialien, wie z.B. Polymeren, dadurch gekennzeichnet, dass das Doppelhydroxid-Salz einwertige und/oder zweiwertige, sowie dreiwertige Metallkationen, sowie ein oder mehrere organische Anionen A aus der Gruppe der

Benzilsäure, Naphthalindisulfonsäuren, z.B. Naphthalin-1,5-disulfonsäure, Naphthalindicarbonsäuren, Hydroxynaphthoesäuren, z.B. 1-Hydroxy-2-naphthoesäure, 2-Hydroxy-1-naphthoesäure, 3-Hydroxy-2-naphthoesäure, Octandicarbonsäure, Decandicarbonsäure (Sebacinsäure), Dodecandicarbonsäure,Tetradecandicarbonsäure, Hexadecandicarbonsäure, Octadecandicarbonsäure, Naphthalintetracarbonsäure, Sulfobernsteinsäure-(C₆-C₂₀)-Alkylmonoester, Sulfobernsteinsäure-(C₆-C₂₂)-Fluoralkylmonoester enthält.

Das besagte Doppelhydroxid-Salz ist dadurch gekennzeichnet, dass die Anzahl der Hydroxygruppen etwa das 1,8 bis 2,2-fache, bevorzugt das etwa 2-fache, der Summe aller Metallkationen beträgt.
Das molare Verhältnis der ein- und/oder zweiwertigen Metallkationen zu den dreiwertigen Metallkationen kann zwischen 10⁴ und 10⁻⁴, bevorzugt zwischen 10 und 0,1, insbesondere zwischen 5 und 0,2, liegen.
Das Verhältnis der einwertigen zu den zweiwertigen Metallkationen kann beliebig sein, bevorzugt sind jedoch Doppelhydroxid-Salze, die, neben den dreiwertigen Metallkationen, ausschließlich zweiwertige Metallkationen oder eine Mischung aus ein- und zweiwertigen Metallkationen enthalten.
A kann ein einfach oder mehrfach geladenes organisches Anion sein. Die Menge der Anionen A wird durch die Stöchiometrie der positiven und negativen Ladungen im Doppelhydroxid-Salz so bestimmt, dass die Summe aller Ladungen Null ergibt. Es ist jedoch möglich, dass ein Teil, beispielsweise 0,1 bis 99 Mol-%, insbesondere 1 bis 90 Mol-%, der Anionen durch andere Anionen, wie z.B. anorganische Anionen, wie Halogenid, Hydrogencarbonat, Carbonat, Sulfat, Nitrat, Phosphat, oder Borat oder Acetat, ersetzt ist.

Die erfindungsgemäß verwendeten Doppelhydroxid-Salze können auch Wassermoleküle als Kristallwasser oder eingelagert zwischen einzelnen Schichten enthalten

Als einwertige Metallkationen kommen insbesondere Alkalimetallkationen, wie Li⁺, Na⁺ oder K⁺, in Betracht. Als zweiwertige Metallkationen kommen insbesondere Mg²⁺, Ca²⁺, Zn²⁺, Co²⁺, Ni²⁺ , Fe²⁺, Cu²⁺ oder Mn²⁺ in Betracht. Als dreiwertige Metallkationen kommen insbesondere Al³⁺ , Fe³⁺, Co³⁺, Mn³⁺, Ni³⁺, Cr³⁺ sowie B³⁺ in Betracht.

Besonders bevorzugt sind Doppelhydroxid-Salze, die Mg²⁺ und Al³⁺ enthalten, insbesondere im molaren Verhältnis 3,1:1 bis 1:2.

Es ist jedoch auch möglich, dass ein Teil, beispielsweise 0,1 bis 99,9 Mol%, bevorzugt 0,2 bis 99,8 Mol%, der organischen Anionen A durch andere organische Anionen A' ersetzt ist, wobei A' C₁₂-C₄₄-Fettsäuren, insbesondere Stearinsäure, ist.

Besonders bevorzugt sind Doppelhydroxid-Salze mit einem molaren Verhältnis Mg:Al von 3,1: 1 bis 1:2, und jeweils Sebacinsäure als organischem Anion, sowie die calcinierten Formen davon.

Ausgangsprodukte für Doppelhydroxide im Sinne der vorliegenden Erfindung sind Hydrotalcite, die meist kommerziell erhältlich sind und ein anorganisches Anion, meist Carbonat, enthalten. Hydrotalcite als solche sowie hydrophobierte Formen sind beispielsweise in der DE-A- 40 10 606 und in der DE-A- 40 34 305 beschrieben. Durch geeignete Methoden, wie z.B. Umsetzung in wässriger, organischer, z.B. alkoholischer, oder wässrig-organischer Suspension mit den entsprechenden organischen Anionen, z.B. in Form ihrer Salze, können aus diesen kommerziellen Produkten die erfindungsgemäß verwendeten Doppelhydroxid-Salze hergestellt werden.

Die Salze schichtartiger Doppelhydroxide werden zweckmäßigerweise in wässrigem Medium in einem pH-Wert von 3 bis 14 und bei einer Temperatur zwischen 0 und 100°C, vorzugsweise unter Rührung und gegebenenfalls auch unter Druck hergestellt. Gegebenenfalls kann die Herstellung auch unter Autoklav-Bedingungen erfolgen, d.h. unter Drücken zwischen 1,1 und 1000 bar, vorzugsweise zwischen 1,1 und 500 bar, insbesondere zwischen 1,1 und 200 bar, sowie bei Temperaturen zwischen 20 und 200°C, vorzugsweise zwischen 30 und 190°C, insbesondere zwischen 40 und 180°C. Die Herstellung kann auch in organischen Lösungsmitteln, wie beispielsweise Alkoholen oder Ketonen, unter den beschriebenen Bedingungen erfolgen, sowie in Mischungen aus Wasser und einem oder mehreren organischen Lösungsmitteln in beliebigem Verhältnis. Das oder die eingesetzten organischen Anionen können in equimolaren Mengen eingesetzt werden, jedoch ist auch ein 0,1 bis 99,9 %iger Unterschuss möglich. Die organischen Anionen können dabei direkt als Salz, z.B. als Natrium- oder Kaliumsalz oder aber als Säure in der protonierten Form eingesetzt werden, wobei im letzteren Fall gegebenenfalls eine pH-Einstellung mittels einer Base wie beispielsweise Natrium- oder Kaliumhydroxid oder -carbonat notwendig ist, um eine bessere Verteilung der Säure im wässrigen Medium zu gewährleisten. Ferner können die organischen Anionen A und A' auch als Säurehalogenide, beispielsweise als Säurechloride, als Säureanhydride, als Säureazide oder Säureester eingesetzt werden. Dies gilt insbesondere für die Herstellung in organischen Lösungsmitteln.

In einer bevorzugten Ausführungsform wird das Hydrotalcit calciniert, d.h. auf eine Temperatur von 150 bis 1000°C, gegebenenfalls unter vermindertem oder erhöhtem Druck, erhitzt. Für die Herstellung der erfindungsgemäss beschriebenen Verbindungen kann es auch von Vorteil sein, die eingesetzten schichtartigen Doppelhydroxide vor der Umsetzung zu trocknen, beispielsweise durch mehrstündiges Erhitzen bei 150°C.
Ferner können die erfindungsgemäss beschriebenen Verbindungen auch hergestellt werden durch direkte Umsetzung der calcinierten oder uncalcinierten Doppelhydroxide mit den entsprechenden organischen Säuren oder deren Salzen unter Erwärmung in einem Mischaggregat, wie beispielsweise einem Kneter, Extruder, Dissolver, einer Perlmühle, einem Henschel-Mischer oder einer Mühle. Ferner ist die Herstellung auch möglich durch die Reaktion von Salzen der Doppelhydroxid-aufbauenden Metallkationen, wie beispielsweise Magnesiumchlorid und Aluminiumchlorid, in wässriger Lösung von Alkalihydroxid mit der Säure oder dem Salz der organischen Anionen A und gegebenfalls A'.

Neu und im Sinne der vorliegenden Erfindung besonders bevorzugt sind Magnesium-Aluminium-Hydroxid-Carbonate mit einem Verhältnis von Mg zu Al von 1,9:1 bis 3,1:1, die 1 bis 45 Gew.-%, bezogen auf ihr Gesamtgewicht, einer Kombination von Anionen der Sebacinsäure und Anionen einer oder mehrerer C₁₂-C₄₄-Fettsäuren, insbesondere Stearinsäure; oder eine Kombination von Anionen der Sebacinsäure und Anionen eines teil- oder perfluorierten Sulfobernsteinsäure-(C₆-C₂₂)-alkylmonoesters, wobei das Verhältnis zwischen Sebacinsäure und Fettsäure bzw. Sulfobernsteinsäure-monoester 1:50 bis 5:1 ist; oder 0,5 bis 70 Gew.-% eines teil- oder perfluorierten Sulfobernsteinsäure-(C₆-C₂₂) alkyl-monoesters enthalten.

Von ganz besonderem Interesse sind dabei Verbindungen der Formeln Mg₆Al₂(OH)₁₆(CO₃)_{b} Zₐ x n H₂O oder Mg₄Al₂(OH)₁₂(CO₃)_{b} Zₐ x n H₂O
wobei b 1 ist, n Null bis 10 ist, Z eine Kombination von Anionen der Sebacinsäure und Anionen einer oder mehrerer C₁₂-C₄₄-Fettsäuren, insbesondere Stearinsäure, ist und die Zahl a so bemessen ist, dass Z 0,5 bis 50 Gew.-%, bevorzugt 1 bis 45 Gew.-%, bezogen auf das Gesamtgewicht der Verbindung, ausmacht.

Im Falle der calcinierten Verbindungen ist n gleich Null bis 2.

Die Herstellung der vorstehend beschriebenen neuen Verbindungen kann in gleicher Weise erfolgen, wie zuvor beschrieben. Bei der Herstellung der Verbindungen, die eine Anionen-Kombination aus Sebacinsäure und einer oder mehrerer Fettsäuren enthalten, können die Sebacinsäure und die entsprechenden Säuren oder die jeweiligen Salze gleichzeitig oder nacheinander oder in beliebigen Teilkombinationen davon umgesetzt werden. Es kann jedoch manchmal vorteilhaft sein, zuerst die Sebacinsäure oder deren Salze umzusetzen, und danach das oder die anderen Anionen zur Reaktionsmischung zuzugeben.

Die erfindungsgemäß verwendeten Salze schichtartiger Doppelhydroxide können genau auf das jeweilige Harz/Toner-System abgestimmt werden. Ein weiterer technischer Vorteil dieser Verbindungen liegt darin, dass sie sich gegenüber den unterschiedlichen Bindemittelsystemen inert verhalten und somit vielfältig einsetzbar sind, wobei von besonderer Bedeutung ist, dass sie nicht in der Polymermatrix gelöst sind, sondern als kleine, feinstverteilte Festkörper vorliegen. Ferner zeigen sie hohe und oftmals sehr konstante Ladungssteuereigenschaften sowie sehr gute Thermostabilitäten. Weiterhin sind die erfindungsgemäß eingesetzten Doppelhydroxide rieselfähig und besitzen eine gute Dispergierbarkeit. Dispergierung bedeutet die Verteilung eines Stoffes in einem anderen, im Sinne der Erfindung die Verteilung eines Ladungssteuermittels im Tonerbindemittel, Pulverlackbindemittel oder Elektretmaterial.

Es ist bekannt, dass kristalline Stoffe in ihrer gröbsten Form als Agglomerate vorliegen. Um eine homogene Verteilung im Bindemittel zu erreichen, müssen diese durch den Dispergiervorgang in kleinere Aggregate oder idealerweise in Primärteilchen zerteilt werden. Die Ladungssteuermittel-Partikel, die nach der Dispergierung im Bindemittel vorliegen, sollten kleiner als 1 µm, vorzugsweise kleiner als 0,5 µm, sein, wobei eine enge Teilchengrößen-Verteilung von Vorteil ist.
Für die Teilchengröße, definiert durch den d₅₀-Wert, finden sich stoffabhängig optimale Wirkbereiche. So sind beispielsweise grobe Teilchen (1 mm) zum Teil gar nicht oder nur mit einem erheblichen Zeit- und Energieaufwand dispergierbar, während sehr feine Teilchen im Submicron-Bereich ein erhöhtes sicherheitstechnisches Risiko, wie die Möglichkeit der Staubexplosion, bergen.

Die Teilchengröße und Form wird entweder durch die Synthese und/oder Nachbehandlung eingestellt und modifiziert. Häufig wird die geforderte Eigenschaft erst durch gezielte Nachbehandlung wie Mahlung und/oder Trocknung möglich. Hierzu bieten sich verschiedene Mahltechniken an. Vorteilhaft sind beispielsweise Luftstrahlmühlen, Schneidmühlen, Hammermühlen, Perlmühlen sowie Prallmühlen.

Typischerweise handelt es sich bei den in der vorliegenden Erfindung erwähnten Bindemittelsystemen um hydrophobe Materialien. Hohe Wassergehalte des Ladungssteuermittels können entweder einer Benetzung entgegenstehen oder aber eine Dispergierung begünstigen (Flushen). Daher ist der praktikable Feuchtegehalt stoffspezifisch.

Die erfindungsgemäßen Verbindungen sind durch folgende chemisch/physikalische Eigenschaften gekennzeichnet:
Der Wassergehalt, nach der Karl-Fischer Methode bestimmt, liegt meist zwischen 0,001 und 30 %, bevorzugt zwischen 0,01 und 25 % und besonders bevorzugt zwischen 0,1 und 15 %, wobei das Wasser adsorbiert und/oder gebunden sein kann, und sich dessen Anteil durch Temperatureinwirkung bis 200°C und Vakuum bis 10⁻⁸ Torr oder durch Wasserzugabe oder Lagerung unter definierten Luftfeuchtebedingungen einstellen lässt.
Überraschenderweise zeigen die erfindungsgemäß verwendeten Verbindungen, die ein oder mehrere vorstehend definierte organische Anionen enthalten, nach 48 h Lagerung bei 90 % rel. Luftfeuchte und 35°C in einem Klimaprüfschrank keinen sonderlich erhöhten H₂O-Gehalt (Karl-Fischer Methode), während die analogen Doppelhydroxide mit anorganischen Anionen deutlich höhere H₂O-Gehalte aufweisen, teilweise ein Mehrfaches gegenüber denen vor der Klimalagerung.

Die Teilchengröße, mittels lichtmikroskopischer Auswertung oder Laserlichtbeugung bestimmt, und definiert durch den d₅₀-Wert, liegt zwischen 0,01 *µ*m und 1000 *µ*m, bevorzugt zwischen 0,1 und 500 *µ*m und ganz besonders bevorzugt zwischen 0,5 und 400 µm. Besonders vorteilhaft ist es, wenn durch die Mahlung eine enge Teilchengröße resultiert. Bevorzugt ist ein Bereich Δ (d₉₅-d₅₀) von kleiner als 500 *µ*m, insbesondere kleiner als 400 µm.
Die Leitfähigkeit der 5 %igen wässrigen Dispersion liegt zwischen 0,001 und 2000 mS, vorzugsweise zwischen 0,01 und 100 mS. Die erfindungsgemäßen Verbindungen enthalten überwiegend kristalline, aber auch amorphe Anteile. Die erfindungsgemäß verwendeten Verbindungen, eingearbeitet in ein Tonerbindemittel, zeigen in einer thermischen Gradientenprüfung (Kofler-Test) eine Temperaturstabilität bis 200°C (keine Verfärbung).

Bei der elektrokinetischen Oberflächenpotentialbestimmung mittels SCD (streaming current detection) zeigen die erfindungsgemäß verwendeten Verbindungen überraschenderweise deutlich niedrigere Oberflächenpotentiale (positives oder negatives Vorzeichen) als die entsprechenden Doppelhydroxide mit anorganischen Anionen. Bei der Titration dieser Verbindungen mit entsprechenden oberflächenaktiven Reagenzien bis zum Nullpunkt des Oberflächenpotentials (SCD-Verfolgung der Titration) ist bei den Verbindungen mit anorganischen Anionen deutlich mehr oberflächenaktives Reagenz nötig als bei den entsprechenden Doppelhydroxiden mit organischen Anionen. Dies weist auf eine relativ hohe Stabilität der Salzbindung zwischen Doppelhydroxid und organischem Anion hin.

Die erfindungsgemäß eingesetzten Salze schichtartiger Doppelhydroxide können auch mit weiteren positiv oder negativ steuernden Ladungssteuermitteln kombiniert werden, um gute anwendungstechnische Aufladbarkeiten zu erzielen, wobei die Gesamt-Konzentration der Ladungssteuermittel zweckmäßig zwischen 0,01 und 50 Gew.-%, bevorzugt zwischen 0,05 und 20 Gew.-%, besonders bevorzugt zwischen 0,1 und 5 Gew.-%, liegt, bezogen auf das Gesamtgewicht des elektrophotographischen Toners, Entwicklers, Pulvers oder Pulverlacks.

Als weitere Ladungssteuermittel kommen beispielsweise in Betracht: Triphenylmethane; Ammonium- und Immoniumverbindungen, lminiumverbindungen; fluorierte Ammonium- und fluorierte lmmoniumverbindungen; biskationische Säureamide; polymere Ammoniumverbindungen; Diallylammoniumverbindungen; Arylsulfid-Derivate, Phenolderivate; Phosphoniumverbindungen und fluorierte Phosphoniumverbindungen; Calix(n)arene, ringförmig verknüpfte Oligosaccharide (Cyclodextrine) und deren Derivate, insbesondere Borester-Derivate, Interpolyelektrolytkomplexe (IPECs); Polyestersalze; Metallkomplexverbindungen, insbesondere Salicylat-Metall-Komplexe und Salicylat-Nichtmetalkomplexe, Salze ionischer Struktursilikate, Hydroxycarbonsäure-Metall-Komplexe und Hydroxycarbonsäure-Nichtmetallkomplexe, Benzimidazolone; Azine, Thiazine oder Oxazine, die im Colour Index als Pigments, Solvent Dyes, Basic Dyes oder Acid Dyes aufgeführt sind.

Besonders bevorzugt sind die nachfolgend genannten Ladungssteuermittel, die einzeln oder in Kombination miteinander mit den erfindungsgemäß verwendeten Doppelhydroxiden kombiniert werden können:
Triphenylmethane, wie z.B. beschrieben in US-A-5 051 585;
Ammonium- und Immoniumverbindungen, wie z.B. beschrieben in US-A-5 015 676;
Fluorierte Ammonium- und fluorierte Immoniumverbindungen, wie z.B. beschrieben in US-A-5 069 994; biskationische Säureamide, wie z.B. beschrieben in WO 91/10172; Diallylammoniumverbindungen, wie z.B. beschrieben in DE-A-4 142 541, DE-A-4 029 652 oder DE-A-4 103 610;
Arylsulfid-Derivate, wie z.B. beschrieben in DE-A-4 031 705;
Phenolderivate, wie z.B. beschrieben in EP-A-0 258 651;
Phosphoniumverbindungen und fluorierte Phosphoniumverbindungen, wie z.B. beschrieben in US-A-5 021 473 und US-A-5 147 748;
Calix(n)arene, wie z.B. beschrieben in EP-A-0 385 580;
Benzimidazolone, wie z.B. beschrieben in EP-A-0 347 695;
Ringförmig verknüpfte Oligosaccharide, wie z.B. beschrieben in DE-A-4 418 842; Polyestersalze, wie z.B. beschrieben in DE-A-4 332 170;
Cyclooligosaccharid-Verbindungen, wie z.B: beschrieben in DE-A-197 11 260;
Inter-Polyelektrolyt-Komplexe, wie z.B. beschrieben in DE-A-197 32 995, Salze ionischer Struktursilikate, wie z.B. beschrieben in PCT/EP 00/11217. Weiterhin geeignet, insbesondere für Flüssigtoner, sind .oberflächenaktive, ionische Verbindungen und sogenannte Metallseifen.
Besonders geeignet sind alkylierte Arylsulfonate, wie Bariumpetronate, Calciumpetronate, Bariumdinonylnaphthalensulfonate (basisch und neutral), Calciumdinonylsulfonat oder Dodecylbenzolsulfonsäure-Na-salz und Polyisobutylensuccinimide (Chevrons Oloa 1200).
Weiterhin geeignet sind Soyalecithin und N-Vinylpyrrolidon-Polymere.
Weiterhin geeignet sind Natriumsalze.von phosphatierten Mono- und Diglyceriden mit gesättigten und ungesättigten Substituenten, AB- Diblockcopolymere von A: Polymere von 2-(N;N)di-methylaminoethyl-methacrylat quarternisiert mit Methyl-p-toluolsulfonat, und B: Poly-2-ethylhexylmethacrylat.
Weiterhin geeignet, insbesondere in Flüssigtonern, sind di- und trivalente Carboxylate, insbesondere Aluminium-tristearat, Bariumstearat, Chromstearat, Magnesiumoktat, Calciumstearat, Eisennaphthalit und Zinknaphthalit.
Weiterhin sind geeignet chelatisierende Ladungssteuermittel (EP 0 636 945 A1), metallische (ionische) Verbindungen (EP 0 778 501 A1), Phosphat-Metallsalze, wie in JA 9 (1997)-106107 beschrieben. Weiterhin geeignet sind Azine der folgenden Color-Index-Nummern: C.I. Solvent Black 5, 5:1, 5:2, 7, 31 und 50; C.I. Pigment Black 1, C.I. Basic Red 2 und C.I. Basic Black 1 und 2.

Die erfindungsgemäß verwendeten schichtartigen Doppelhydroxide werden einzeln oder in Kombination miteinander oder mit weiteren, vorstehend genannten Ladungssteuermitteln, in einer Konzentration von 0,01 bis 50 Gew.-%, vorzugsweise von 0,05 bis 20 Gew.-%, besonders bevorzugt von 0,1 bis 5,0 Gew.-%, bezogen auf die Gesamtmischung, in das Bindemittel des jeweiligen Toners, Entwicklers, Lacks, Pulverlacks, Elektretmaterials oder des elektrostatisch zu trennenden Polymers homogen, beispielsweise durch Extrudieren oder Einkneten, Perlmahlen oder mit Ultraturrax (Schnellrührer) eingearbeitet. Dabei können die erfindungsgemäß eingesetzten Verbindungen als getrocknete und gemahlene Pulver, Dispersionen oder Lösungen, Presskuchen, Masterbatches, Präparationen, angeteigte Pasten, als auf geeignete Träger, wie z.B. Kieselgel bzw. mit solchen Trägern vermischt, TiO₂, Al₂O₃, Ruß, aus wässriger oder nicht-wässriger Lösung aufgezogene Verbindungen oder in sonstiger Form zugegeben werden. Ebenso können die erfindungsgemäß verwendeten Verbindungen grundsätzlich auch schon bei der Herstellung der jeweiligen Tonerpolymer-Matrix zugegeben werden, d.h. im Verlauf von deren Polymerisation, Polyaddition oder Polykondensation, sowie bei der Herstellung von Polymerisationstonern, beispielsweise während der Suspensions-, Emulsions-polymerisation oder bei der Aggregation der Polymersysteme zu Tonerteilchen.

Die erfindungsgemäßen Ladungssteuermittel können auch in Form feinverteilter wässriger, wässrig-organischer oder organischer Dispersionen eingesetzt werden. Die Teilchengrößen (d₅₀-Werte) liegen zwischen 20 nm und 1 µm, bevorzugt zwischen 50 und 500 nm. Zweckmäßig sind Konzentrationen an Ladungssteuermittel zwischen 0,01 und 50 Gew.-%, vorzugsweise zwischen 0,1 und 30 Gew.-%, bezogen auf das Gesamtgewicht der Dispersion. Die Viskosität einer solchen Dispersion liegt zweckmäßigerweise zwischen 0,5 und 10⁶ mPa·s, vorzugsweise zwischen 1 und 5000 mPa·s.
Im Falle wässriger oder wässrig-organischer Dispersionen wird Wasser vorzugsweise in Form von destilliertem oder entsalztem Wasser eingesetzt.
Im Fall organischer oder wässrig-organischer Dispersionen werden als organisches Medium ein oder mehrere organische Lösemittel eingesetzt, vorzugsweise aus der Gruppe der ein- oder mehrwertigen Alkohole, deren Ether und Ester, z. B. Alkanole, insbesondere mit 1 bis 4 C-Atomen, wie z.B. Methanol, Ethanol, Propanol, Isopropanol, Butanol, Isobutanol; zwei- oder dreiwertige Alkohole, insbesondere mit 2 bis 6 C-Atomen, z. B. Ethylenglykol, Propylenglykol, 1,3-Propandiol, 1,4-Butandiol, 1,5-Pentandiol, 1,6-Hexandiol, 1,2,6-Hexantriol, Glyzerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykolmonomethyl- oder ethyl- oder butylether, Triethylenglykolmonomethyl- oder ethylether; Ketone und Ketonalkohole, wie z.B. Aceton, Methylethylketon, Di-ethylketon, Methylisobutylketon, Methylpentylketon, Cyclopentanon, Cyclohexanon, Diacetonalkohol; Amide, wie z.B. Dimethylformamid, Dimethylacetamid und N-Methylpyrrolidon.
Zur Herstellung stabiler Dispersionen können zusätzlich noch übliche ionische oder nichtionische niedermolekulare oder polymere Dispergierhilfsmittel, wie z.B. Sulfate, Sulfonate, Phosphate, Polyphosphate, Carbonate, Carboxylate, Carbonsäuren, Silicate, Hydroxide, Metallseifen, Polymere, wie Acrylate, Fettsäurederivate und Glycosidverbindungen, eingesetzt werden.
Weiterhin können die Dispersionen Metallkomplexbildner, wie z.B. EDTA oder NTA, enthalten.

Weiterhin können die Dispersionen noch weitere übliche Zusatzstoffe enthalten, wie beispielsweise Konservierungsmittel, Biocide, Antioxidantien, kationische, anionische, amphotere oder nichtionogene oberflächenaktive Substanzen (Tenside und Netzmittel), Entgaser/Entschäumer sowie Mittel zur Regulierung der Viskosität, z.B. Polyvinylalkohol, Cellulosederivate oder wasserlösliche natürliche oder künstliche Harze und Polymere als Filmbildner bzw. Bindemittel zur Erhöhung der Haft- und Abriebfestigkeit. Als pH-Regulatoren kommen organische oder anorganische Basen und Säuren zum Einsatz. Bevorzugte organische Basen sind Amine, wie z.B. Ethanolamin, Diethanolamin, Triethanolamin, Diethylaminoethanol (DEAE), N,N-Dimethyl-ethanolamin, Diisopropylamin, Aminomethylpropanol oder Dimethylminomethylpropanol. Bevorzugte anorganische Basen sind Natrium-, Kalium-, Lithiumhydroxid oder Ammoniak. Weitere Bestandteile können hydrotrope Verbindungen sein, wie z.B. Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, Zucker, N-Methylpyrrolidon, 1,3-Diethyl-2-imidazolidinon, Thiodiglykol, Natrium-Benzolsulfonat, Na-Xylolsulfonat, Na-Toluolsulfonat, Na-Cumolsulfonat, Na-Benzoat, Na-Salicylat oder Na-Butylmonoglykolsulfat.
Die Konzentration dieser Dispergierhilfsmittel und/oder üblicher Zusatzstoffe in der Dispersion liegt zweckmäßigerweise zwischen 0,001 und 80 Gew.-%, vorzugsweise zwischen 0,01 und 50 Gew.-%, bezogen auf das Gesamtgewicht der Dispersion.

Um elektrophotographische Bunttoner herzustellen, werden Farbmittel wie organische Buntpigmente, anorganische Pigmente oder Farbstoffe, üblicherweise in Form von Pulvern, Dispersionen, Presskuchen, Lösungen oder Masterbatches zugesetzt.
Die organischen Buntpigmente können aus der Gruppe der Azopigmente oder polycyclischen. Pigmente oder Mischkristalle (solid solutions) solcher Pigmente sein.

Bevorzugte Blau- und/oder Grünpigmente sind Kupferphthalocyanine, wie C.I. Pigment Blue 15, 15:1, 15:2, 15:3, 15:4, 15:6, P. Blue 16 (metallfreies Phthalocyanin), oder Phthalocyanine mit Aluminium, Nickel, Eisen oder Vanadium als Zentralatom, weiterhin Triarylcarboniumpigmente, wie Pigment Blue 1, 2, 9, 10, 14, 16, 56, 60, 61, 62, 68, 80. Pigment Green 1, 4, 7, 17, 36, 50 45; Orange-Pigmente, wie z.B. P.O. 5, 13, 34, 36, 38, 43, 62, 68,70, 72, 71, 74; Gelbpigmente, wie z.B. P.Y. 12, 13, 14, 17, 74, 83, 93, 97, 111, 120,122, 139,151, 154, 155, 174, 175, 176,180, 174, 185, 194, 213, 214. Rot-Pigmente, wie z.B. P.R. 2,3, 4,5,9, 38, 48, 53, 57, 112, 122, 144, 146, 147,149, 168, 170, 175,176, 177,179,181, 184, 185, 186, 188, 189, 202, 207, 208, 209, 210, 214, 219, 238, 253; 254, 255, 256,257, 266, 269, 270, 272, 279. Violett-Pigmente wie P.V. 1, 19, 23,32, Ruße wie P. Black 7, 11, 33 oder in ihrer oberflächenmodifizierten Form wie in US 5,554,739 beschrieben, Eisen/Mangan-Oxide; weiterhin Mischkristalle wie beispielsweise aus oben beschriebenen Pigmenten wie C.I. Pigment Violett 19 und C.I. Pigment Red 122, sowie azo-oberflächenmodifizierte Pigmente wie in WO 01/30919 beschrieben.

Die Mischungen können in Form der Pulver, Granulate, durch Mischen von Presskuchen, sprühgetrockneten Presskuchen, Masterbatches sowie durch Dispergieren (Extrusion, Kneten, Walzenstuhlverfahren, Perlmühlen, Ultraturrax, Ultraschall) in Gegenwart eines Trägermaterials in fester oder flüssiger Form (Tinten auf wässriger und nicht-wässriger Basis) sowie durch Flushen in Gegenwart eines Trägermaterials hergestellt werden. Wird das Farbmittel mit hohen Wasser- oder Lösemittelanteilen eingesetzt (> 5 %), so kann das Mischen auch in Gegenwart erhöhter Temperaturen, durch nachträgliches Abkühlen der Mischungs-Masse und durch Vakuum unterstützt ablaufen. Der Flushvorgang kann in Gegenwart oder Abwesenheit von organischen Lösemitteln und von Wachsen ablaufen.

Insbesondere zur Steigerung der Brillanz, aber auch zur Nuancierung des Farbtones bieten sich Mischungen mit organischen Farbstoffen an. Als solche sind bevorzugt zu nennen:
wasserlösliche Farbstoffe, wie z.B. Direct, Reactive und Acid Dyes, sowie lösemittellösliche Farbstoffe, wie z.B. Solvent Dyes, Disperse Dyes und Vat Dyes. Als Beispiele seien genannt: C.I. Reactive Yellow 37, Acid Yellow 23, Reactive Red 23, 180, Acid Red 52, Reactive Blue 19, 21, Acid Blue 9, Direct Blue 199, Solvent Yellow 14, 16, 25, 56, 62, 64, 79, 81, 82, 83, 83:1, 93, 98, 133, 162, 174, Solvent Red 8, 19, 24, 49, 89, 90, 91, 92, 109, 118, 119, 122, 124, 127, 135, 160, 195, 212, 215, Solvent Blue 44, 45, Solvent Orange 41, 60, 63, Disperse Yellow 64, Vat Red 41, Solvent Black 45, 27.
Auch können Farbstoffe und Pigmente mit fluoreszierenden Eigenschaften, wie ^{®}Luminole (Riedel-de Haen) eingesetzt werden, beispielsweise um fälschungssichere Toner herzustellen.
Weiterhin können die Farbmittel auch in einer speziellen wachsgecoateten Form, wie in der EP-A-1 204 005 beschrieben, in Kombination mit den erfindungsgemäßen Ladunngssteuermitteln verwendet werden.

Anorganische Pigmente, wie beispielsweise TiO₂ oder BaSO₄, dienen in Mischungen zur Aufhellung. Weiterhin sind Mischungen mit Effekt-Pigmenten, wie beispielsweise Perlglanz-Pigmenten, Fe₂O₃-Pigmenten (^{®}Paliochrome) sowie Pigmenten auf Basis cholesterischer Polymere, die in Abhängigkeit vom Beobachtungswinkel unterschiedliche Farbeindrücke ergeben, geeignet.

Elektrophotographische Toner und auch Pulverlacke können weiterhin noch Wachse enthalten. Der Begriff "Wachs" bezeichnet eine Reihe natürlicher oder künstlich gewonnener Stoffe, die in der Regel folgende Eigenschaften aufweisen: Bei 20°C knetbar, fest bis brüchig hart, grob bis feinkristallin, durchscheinend bis opak, jedoch nicht glasartig; über 40°C ohne Zersetzung schmelzend, schon wenig oberhalb des Schmelzpunktes verhältnismäßig niedrigviskos und nicht fadenziehend, stark temperaturabhängige Konsistenz und Löslichkeit, unter leichtem Druck polierbar (vgl. Ullmanns Enzyklopädie der technischen Chemie, Band 24, 4. Auflage 1983, S. 1-49, Verlag Chemie, Weinheim und Römpps Chemie-Lexikon, Band 6, 8. Auflage1988, S. 463, Franck'sche Verlagshandlung).

Als Wachse werden bevorzugt: Naturwachse, wie Pflanzenwachse, z.B. Carnaubawachs, Candellilawachs, und tierische Wachse, z.B. Bienenwachs, modifizierte Naturwachse, wie z.B. Paraffinwachse, Mikrowachse, teilsynthetische Wachse, wie z.B. Montanesterwachse, oder vollsynthetische Wachse, wie Polyolefinwachse, z.B. Polyethylen und Polypropylenwachse, Polyethylenglykolwachse, Cycloolefincopolymerwachse, Amidwachse, wie z.B. N,N'-Distearylethylendiamin, Zirconocenwachse sowie chlor- oder fluorhaltige Polyolefinwachse oder Polyethylen-Polytetrafluorethylen-Wachsmischungen.

Besonders bevorzugt sind Polyolefinwachse, sowie polare Gruppen enthaltende Polyolefinwachse, entstanden durch nachträgliche Oxidation des Polyolefinwachses, durch Pfropfreaktion mit Carbonsäure-, Carbonsäureester-, Carbonsäureanhydrid- oder Hydroxygruppen enthaltenden Monomeren oder durch Copolymerisation aus einem Olefin und einem Carbonsäure-, Carbonsäureester-, Carbonsäureamid-, Carbonsäureanhydrid- oder Hydroxygruppen enthaltenden Monomer.

Wachse im Sinne der vorliegenden Erfindung können auch höhermolekulare Verbindungen sein, die einen wachsartigen Charakter aufweisen und vorzugsweise durch Polykondensations-, Polyadditions- oder Polymerisationsverfahren hergestellt wurden, z.B. thermoplastische Polyester-, Epoxid-, Styrol-Acrylat-Copolymer-, Styrol-Butadien-Copolymer-, Cycloolefincopolymer-Harze, wie z.B. ^{®}Topas. Um eine ausreichende Löslichkeit bei erhöhter Temperatur in organischen Lösungsmitteln zu besitzen, besitzen solche Polymere meist ein Zahlenmittel des Molekulargewichts (M̅ₙ) von 500 bis zu 20000. Bevorzugt sind Wachse mit einem Zahlenmittel des Molekulargewichts (M̅ₙ) von 800 bis zu 10000, besonders bevorzugt mit einem Zahlenmittel des Molekulargewichts (M̅ₙ) von 1000 bis zu 5000.

Der Tropfpunkt der erfindungsgemäß eingesetzten Wachse oder die Erweichungstemperatur der genannten wachsartigen Polymere liegt vorzugsweise im Bereich von 20 bis 180°C, besonders bevorzugt im Bereich von 30 bis 140°C.

Gegenstand der vorliegenden Erfindung ist auch ein elektrophotographischer Toner, Pulver oder Pulverlack, enthaltend 30 bis 99,99 Gew.-%, vorzugsweise 40 bis 99,5 Gew.-%, eines üblichen Bindemittels, beispielsweise ein Styrol-, Styrolacrylat, Styrolbutadien-, Acrylat-, Urethan-, Acryl-, Polyester- oder Epoxidharz oder eine Kombination der letzten beiden, 0,01 bis 50 Gew.-%, vorzugsweise 0,05 bis 20 Gew.-%, besonders bevorzugt 0,1 bis 5 Gew.-%, mindestens eines Salzes schichtartiger Doppelhydroxide, wie vorstehend beschrieben, und gegebenenfalls 0,001 bis 50 Gew.-%, vorzugsweise 0,05 bis 20 Gew.-%, eines Farbmittels, jeweils bezogen auf das Gesamtgewicht des elektrophotographischen Toners, Pulvers oder Pulverlacks.

Ferner können die erfindungsgemäß beschriebenen Verbindungen auf "Free-Flow Agents" als zusätzliches Ladungssteuerelement in suspendierter Form oder in trockener Abmischung aufgebracht werden. Die erfindungsgemäß beschriebenen Verbindungen können auch für ein "Carrier-Coating" eingesetzt werden.

In den nachfolgenden Beispielen bedeuten Teile Gewichtsteile und Prozent Gewichtsprozent.

### Herstellungsbeispiel 1

10 g Mg-Al-Hydroxid-carbonat (stöchiometrisches Mg:Al-Verhältnis = 2:1) (Syntal HSA 696, Fa. Südchemie, Deutschland) werden in 100 ml deionisiertem Wasser 1 Stunde bei 60 bis 80°C mittels Rühren dispergiert. Dann wird eine Lösung aus 1,5 g Sebacinsäure in 100 ml deionisiertem Wasser unter Zugabe von Natriumhydroxid bis zu einem pH von ca. 8 hergestellt und zur Mg-AI-Hydroxid-carbonat-Suspension zugegeben. Die Mischung wird bei 70°C 6 Stunden gerührt, die Suspension abfiltriert, mehrmals mit deionisiertem Wasser nachgewaschen und anschließend bei 60 - 80°C im Vakuum getrocknet.

### Charakterisierung:

| weißes Pulver | |
|---|---|
| DSC: | keine Zersetzung bis 400°C |
| pH: | 8,9 |
| Leitfähigkeit: | 250 µS/cm |
| Restfeuchte: | 5,6 % |
| tan δ (1 kHz): | 0,5 |
| Ω cm: | 2 x 10⁸ |
| | |
| Löslichkeiten: | < 1 g/l (20°C) in Wasser, Ethanol, Aceton, Dimethylsulfoxid, n-Hexan |
| Teilchengrößenverteilung: | d₅₀ = 15 µm, d₉₅ = 39 µm (Laserlichtbeugung) |

### Herstellungsbeispiel 2

10 g calciniertes Mg-Al-Hydroxid-carbonat (stöchiometrisches Mg:Al-Verhältnis = 2:1) (Syntal HSAC 701, Fa. Südchemie) werden in 100 ml deionisiertem Wasser 1 Stunde bei 60°C mittels Rühren dispergiert. Dann wird eine Lösung aus 1,5 g 2-Hydroxy-1-naphthoesäure-Natriumsalz in 100 ml deionisiertem Wasser zur Mg-AI-Hydroxid-carbonat-Suspension zugegeben und die Mischung bei 80°C 30 Stunden gerührt. Danach wird die Suspension abfiltriert, mehrmals mit deionisiertem Wasser nachgewaschen und anschließend bei 70°C im Vakuum getrocknet.

In analoger Weise werden die in nachstehender Tabelle aufgeführten Verbindungen hergestellt: Herstellungsbeispiele 3 bis 9:

| Bsp. Nr. | Doppelhydroxid | Anion A |
|---|---|---|
| 3 | Syntal HSAC 701 (calcin.) | Benzilsäure |
| 4 | Syntal HSAC 701 (calcin.) | Naphthalin-1,5-disulfonsäure |
| 5 | Syntal HSAC 701 (calcin.) | 1-Hydroxy-2-naphthoesäure |
| 6 | Syntal HSAC 701 (calcin.) | 2-Hydroxy-1-naphthoesäure |
| 7 | Syntal HSAC 701 (calcin.) | Sebacinsäure |
| 8 | Syntal HSA 696 | Sebacinsäure |
| 9 | Syntal HSA 696 | Naphthalin-1,5-disulfonsäure |

### Herstellungsbeispiel 10:

10 g Mg-Al-Hydroxid-carbonat der Formel Mg₄Al₂(OH)₁₂CO₃ aq. (Pural MG 61 HT, Fa. Sasol, Deutschland) werden in 100 ml deionisiertem Wasser 15 Minuten bei Raumtemperatur mittels Rühren dispergiert. Dann wird eine Lösung aus 1,0 g Sebacinsäure in 100 ml deionisiertem Wasser unter Zugabe von Natriumhydroxid bis zu einem pH von ca. 9 hergestellt und zur Mg-Al-Hydroxid-carbonat-Suspension zugegeben. Die Mischung wird bei 80°C 6 Stunden gerührt, die Suspension abfiltriert, mehrmals mit deionisiertem Wasser nachgewaschen und anschließend bei 70°C im Vakuum getrocknet.

### Charakterisierung Herstellungsbeispiel 10:

| | |
|---|---|
| Aussehen: | weißes Pulver |
| DSC: | keine Zersetzung bis 400°C |
| pH: | 7,2 |
| Leitfähigkeit: | 50 µS/cm |
| Restfeuchte: | 1,4 % |
| tan δ (1 kHz): | 4,6 |
| Ω cm: | 2 x 10⁷ |
| Kristallinität: | sehr hoch, zahlreiche Peaks zwischen 2 Theta 2 und 50° (Hauptpeaks: 11,7°; 23,5°; 34,6°; 35,6°; 38,8°; 46,0°; 46,9°); |
| BET | 12 m²/g |
| Teilchengrößenverteilung: | d₅₀ = 14 µm, d₉₅ = 37 µm (Laserlichtbeugung) |
| Löslichkeiten: | < 1 g/l (20°C) in Wasser, Ethanol, Aceton, Dimethylsulfoxid, n-Hexan |
| C-Gehalt (Elementaranalyse): | 2,66% (entspricht 4,4Gew.% Sebacinsäure) |

In analoger Weise werden die in nachstehender Tabelle aufgeführten Verbindungen hergestellt: Herstellungsbeispiele 11 und 12:

| | | |
|---|---|---|
| 11 | Pural MG 30, Fa. Sasol (Mg:Al = 1:2) | Sebacinsäure |
| 12 | Pural MG 50, Fa. Sasol (Mg:Al = 5:4) | Sebacinsäure |

### Herstellungsbeispiel 13:

10 g Mg-Al-Hydroxid-carbonat der Formel Mg₆Al₂(OH)₁₆CO₃ aq. (Pural MG 70, Fa. Sasol, Deutschland) werden in 100 ml deionisiertem Wasser 15 Minuten bei 60°C mittels Rühren dispergiert. Dann wird eine Lösung aus 1,25 g Sebacinsäure in 100 ml deionisiertem Wasser unter Zugabe von Natriumhydroxid bis zu einem pH von ca. 8-9 hergestellt und zur Mg-Al-Hydroxid-carbonat-Suspension zugegeben. Die Mischung wird bei 60°C 4 Stunden gerührt, die Suspension abfiltriert, mehrmals mit deionisiertem Wasser nachgewaschen und anschließend bei 60°C im Vakuum getrocknet.

### Charakterisierung Herstellungsbeispiel 13:

| | |
|---|---|
| Aussehen: | elfenbeinfarbenes Pulver |
| DSC: | keine Zersetzung bis 400°C |
| pH: | 7,5 |
| Leitfähigkeit: | 125 µS/cm |
| Restfeuchte: | 3,4 % |
| tan δ (1 kHz): | 0,93 |
| Ω cm: | 6 x 10⁷ |
| Kristallinität: | sehr hoch, zahlreiche Peaks zwischen 2 Theta 2 und 50° (Hauptpeaks: 11,4°; 22,9°; 34,4°; 38,4°; 45,2°; 46,3°); |
| BET | 19,8 m²/g |
| Teilchengrößenverteilung: | d₅₀ = 18 µm, d₉₅ = 42 µm (Laserlichtbeugung) |
| Löslichkeiten: | < 1 g/l (20°C) in Wasser, Ethanol, Aceton, Dimethylsulfoxid, n-Hexan |
| C-Gehalt (Elementaranalyse): | 2,7% (entspricht 4,5% Sebacinsäure) |

### Herstellungsbeispiel 13a:

es wird wie in Herstellungsbeispiel 13 verfahren, wobei anstelle von Sebacinsäure 1,5g getrocknetes Fluowet SB liq. (Handelsprodukt der Fa. Clariant GmbH, Deutschland, getrocknet i. Vak. bei 80°C/24h; entspricht (C₆-C₂₂)-Fluoralkylsulfobernsteinsäuremonoester-di-Natriumsalz) eingesetzt werden.
Ausbeute: 11,3g eines weissen Pulvers.

### Herstellungsbeispiel 14:

10 g Mg-Al-Hydroxid-carbonat der Formel Mg₄Al₂(OH)₁₂CO₃ aq. (Pural MG 61 HT, Fa. Sasol, Deutschland) werden in 100 ml deionisiertem Wasser 15 Minuten bei 60°C mittels Rühren dispergiert. Dann wird eine Lösung aus 1,5 g Sebacinsäure in 50 ml deionisiertem Wasser unter Zugabe von Natriumhydroxid bis zu einem pH von ca. 9 hergestellt und zur Mg-Al-Hydroxid-carbonat-Suspension zugegeben. Anschliessend wird eine Lösung aus 2 g Stearinsäure in einer Mischung aus 50 ml deionisiertem Wasser und 50ml Isopropanol unter Zugabe von Natriumhydroxid bis zu einem pH von ca. 12 und Erwärmen auf 70°C hergestellt und zum Reaktionsgemisch zugegeben. Die Gesamtmischung wird bei 80°C 6 Stunden gerührt, wobei der pH-Wert stets auf ca. 9 gehalten wird, dann die Suspension abfiltriert, mehrmals mit deionisiertem Wasser nachgewaschen und anschließend bei 70°C im Vakuum getrocknet.

### Charakterisierung Herstellungsbeispiel 14:

| | |
|---|---|
| Aussehen: | weisses Pulver |
| DSC: | keine Zersetzung bis 400°C |
| pH: | 8,6 |
| Leitfähigkeit: | 275 µS/cm |
| Restfeuchte: | 1,1 % |
| tan δ (1 kHz): | 0,19 |
| Ω cm: | 6,0 x 10¹⁰ |
| DE-Zahl (1 kHz): | 7,4 |
| Kristallinität: | sehr hoch, zahlreiche Peaks zwischen 2 Theta 2 und 50° (Hauptpeaks: 3,4°; 5,1°; 5,8°; 11,7°; 23,5°; 34,6°; 35,6°; 38,9°; 39,4°; 46,0°); |
| BET | 12,8 m²/g |
| Teilchengrößenverteilung: | d₅₀ = 13 µm, d₉₅ = 31 µm (Laserlichtbeugung) |
| C-Gehalt (Elementaranalyse): | 11,88% |

### Herstellungsbeispiel 15:

10 g Mg-Al-Hydroxid-carbonat der Formel Mg₆Al₂(OH)₁₆CO₃ aq. (Pural MG 70, Fa. Sasol, Deutschland) werden in 100 ml deionisiertem Wasser 15 Minuten bei 70°C mittels Rühren dispergiert. Dann wird eine Lösung aus 1,5 g Sebacinsäure in 50 ml deionisiertem Wasser unter Zugabe von Natriumhydroxid bis zu einem pH von ca. 9 hergestellt und zur Mg-Al-Hydroxid-carbonat-Suspension zugegeben. Anschliessend wird eine Lösung aus 2 g Stearinsäure in einer Mischung aus 50 ml deionisiertem Wasser und 50ml Isopropanol unter Zugabe von Natriumhydroxid bis zu einem pH von ca. 12 und Erwärmen auf 70°C hergestellt und zum Reaktionsgemisch zugegeben. Die Gesamtmischung wird bei 80°C 5 Stunden gerührt, die Suspension abfiltriert, mehrmals mit deionisiertem Wasser nachgewaschen und anschließend bei 60°C im Vakuum getrocknet.

### Charakterisierung Herstellungsbeispiel 15:

| | |
|---|---|
| Aussehen: | weisses Pulver |
| DSC: | keine Zersetzung bis 400°C |
| pH: | 8,3 |
| Leitfähigkeit: | 325 µS/cm |
| Restfeuchte: | 1,3 % |
| tan δ (1 kHz): | 0,26 |
| Ω cm: | 1,0 x 10¹⁰ |
| DE-Zahl (1 kHz): | 18 |
| Kristallinität: | sehr hoch, zahlreiche Peaks zwischen 2 Theta 2 und 50° (Hauptpeaks: 3,4°; 5,1°; 8,5°; 11,4°; 21,9°; 22,9°; 34,4°; 38,2°; 39,0°; 45,2°); |
| BET | 20,6. m²/g |
| Teilchengrößenverteilung: | d₅₀ = 15 µm, d₉₅ = 39 µm (Laserlichtbeugung) |
| C-Gehalt (Elementaranalyse): | 13,74% |

### Anwendungsbeispiele

### Anwendungsbeispiel 1a

1 Teil der Verbindung aus Herstellungsbeispiel 1 wird mittels eines Kneters innerhalb von 30 Minuten in 99 Teile eines Tonerbindemittels (Styrol-Acrylat-Copolymer 60:40 ^{®}Almacryl B-1501) homogen eingearbeitet. Anschließend wird auf einer Labor-Universalmühle gemahlen und dann auf einem Zentrifugalsichter klassifiziert. Die gewünschte Teilchenfraktion (4 bis 25 µm) wird mit einem Carrier aktiviert, der aus mit Styrol-Methacrylat-Copolymer (90:10) beschichteten Magnetit-Teilchen der Größe 50 bis 200 *µ*m besteht.

### Anwendungsbeispiel 1b

Es wird wie in Anwendungsbeispiel 1a verfahren, wobei, anstelle des Styrol-Acrylat-Copolymers ein Polyesterharz auf Bisphenol-A-Basis (^{®}Fine Tone 382-ES) und als Carrier mit Silikon beschichtete Ferrit-Teilchen der Größe 50 bis 200 µm verwendet werden.

Die Messung erfolgt an einem üblichen q/m-Messstand. Durch Verwendung eines Siebes mit einer Maschenweite von 45 *µ*m wird sichergestellt, dass bei den Tonerausblasungen kein Carrier mitgerissen wird. Die Messungen erfolgen bei ca. 50 %iger relativer Luftfeuchte. In Abhängigkeit von der Aktivierdauer werden die in der nachstehenden Tabelle angegebenen q/m-Werte [µC/g] gemessen:

| Aktivierdauer | Anwendungsbeispiel | |
|---|---|---|
| | 1a | 1b |
| | Aufladung q/m [µC/g] | |
| 5 Min. | -10 | -23 |
| 10 Min. | -10 | -23 |
| 30 Min. | -11 | -24 |
| 2 Std. | -12 | -27 |

### Anwendungsbeispiele 2 bis 15:

Es wird wie in Anwendungsbeispiel 1b verfahren, wobei anstelle der Verbindung aus Herstellungsbeispiel 1 die Verbindungen der übrigen Herstellungsbeispiele eingesetzt werden.
Die in den Anwendungsbeispielen eingesetzten Verbindungen entsprechen den Herstellungsbeispielen gleicher Nummer.

| Bsp. Nr. | q/m [µC/g] | | | |
|---|---|---|---|---|
| | 5 Min. | 10. Min. | 30 Min. | 2 Std. |
| 2 | -21 | -25 | -30 | -31 |
| 3 | -16, | -21 | -24 | -25 |
| 4 | - 24 | - 27 | - 28 | - 30 |
| 5 | - 15 | - 22 | - 24 | - 25 |
| 6 | -21 | -25 | -30 | -31 |
| 7 | -21 | -25 | -28 | -29 |
| 8 | - 23 | - 24 | -28 | 30 |
| 9 | - 17 | - 26 | - 30 | - 32 |
| 10 | - 26 | -35 | - 42 | - 48 |
| 11 | - 18 | - 20 | - 23 | - 25 |
| 12 | -26 | -24 | -25 | -29 |
| 13 | -28 | -30 | -36 | -40 |
| 13a | -30 | -34 | -37 | -40 |
| 14 | -27 | -30 | -37 | -43 |
| 15 | -24 | -28 | -32 | -38 |

### Anwendungsbeispiele 16 bis 25

Es wird wie in den Anwendungsbeispielen 8 bis 13 verfahren, wobei anstelle von 1 Teil jeweils 0,5 oder 2 Teile der jeweiligen Verbindungen aus den Herstellungsbeispielen 8 bis 13 eingesetzt werden.

| Bsp. Nr. | Herstell Bsp. Nr. | Teile | q/m [µC/g] | | | |
|---|---|---|---|---|---|---|
| | | | 5 Min. | 10 Min. | 30 Min. | 120 Min. |
| 16 | 8 | 2 | -26 | -26 | -29 | -31 |
| 17 | 9 | 2 | -19 | -27 | -32 | -35 |
| 18 | 10 | 0,5 | -19 | -22 | -27 | -29 |
| 19 | 10 | 2 | -28 | -37 | -45 | -50 |
| 20 | 11 | 0,5 | -12 | -19 | -21 | -21 |
| 21 | 11 | 2 | -31 | -31 | -34 | -34 |
| 22 | 12 | 0,5 | -15 | - 18 | -20 | -22 |
| 23 | 12 | 2 | - 26 | -25 | - 30 | - 34 |
| 24 | 13 | 0,5 | -17 | - 20 | - 25 | -30 |
| 25 | 13 | 2 | - 37 | - 36 | - 39 | - 43 |

### Anwendungsbeispiele 26 bis 31:

Es wird wie in den Anwendungsbeispielen 10 und 13 verfahren, wobei zusätzlich noch 5 Teile eines organischen Pigments (Ruß ^{®}Mogul L, Cabot; ^{®}Toner Magenta EO2, Clariant (C.I. Pigment Red 122); ^{®}Toner Yellow HG, Clariant (C.I. Pigment Yellow 180)) eingearbeitet werden.

| Bsp. Nr. | Teile | Herstell Bsp. | organisches Pigment | q/m [µC/g] | | | |
|---|---|---|---|---|---|---|---|
| | | | | 5 Min. | 10 Min. | 30 Min. | 120 Min. |
| 26 | 1 | 10 | Toner Magenta EO2 | - 17 | - 21 | - 23 | - 23 |
| 27 | 1 | 10 | Toner Yellow HG | - 20 | - 23 | - 26 | - 28 |
| 28 | 1 | 10 | Ruß | -17 | -20 | -21 | -20 |
| 29 | 1 | 13 | Toner Magenta EO 2 | - 17 | - 20 | - 22 | - 22 |
| 30 | 1 | 13 | Toner Yellow HG | - 18 | - 21 | - 22 | - 23 |
| 31 | 1 | 13 | Ruß | -19 | -22 | -21 | -22 |

### Anwendungsbeispiele 32 bis 34:

Es wird wie in Anwendungsbeispiel 10 und 13 verfahren, wobei zusätzlich noch 2 bzw. 3 Teile eines Farbmittels mit elektrostatisch positivem Eigeneffekt (C.I. Solvent Blue 125, siehe Vergleichsbeispiel A) eingearbeitet werden.

| Bsp. Nr. | Herstell. Bsp. | Teile Farbmittel | q/m [µC/g] | | | |
|---|---|---|---|---|---|---|
| | | | 5 Min. | 10 Min. | 30 Min. | 120 Min. |
| 32 | 10 | 2 | -8 | -5 | -2 | 0 |
| 33 | 10 | 3 | -6 | -3 | -1 | +1 |
| 34 | 13 | 2 | -9 | -7 | -5. | -2 |

### Vergleichsbeispiel A:

Es wird wie in Anwendungsbeispiel 32 verfahren, wobei 2 Teile C.I. Solvent Blue 125, aber kein erfindungsgemäßes Ladungssteuermittel eingearbeitet wird.

| Aktivierdauer | Aufladung q/m [µC/g] |
|---|---|
| 5 Min | - 5 |
| 10 Min | ± 0 |
| 30 Min | + 5 |
| 120 Min | + 6 |

Der ausgeprägte positive triboelektrische Eigeneffekt des blauen Farbmittels ist deutlich erkennbar.

### Anwendungsbeispiel 35

1 Teil der Verbindung aus dem Herstellungsbeispiel 10 wurde in 99 Teile eines Pulverlackbindemittels (^{®}Crylcoat 430) homogen eingearbeitet, wie bei den oben erwähnten Anwendungsbeispielen beschrieben. Die Triboversprühung der Pulver(lacke) wurde mit einem Sprühgerät ^{®}TriboStar der Firma Intec (Dortmund), mit einem Normsprührohr und einer Sterninnenstange bei maximalem Pulverdurchsatz mit einem Sprühdruck von 3 und 5 bar durchgeführt. Die aus der elektrostatischen Ladung von Pulverlack oder Pulver sich ergebende Stromstärke wurde in µA angezeigt. Die Abscheidequote wurde anschließend in % durch eine Differenzwiegung aus versprühtem und abgeschiedenem Pulverlack bestimmt.

| Druck [bar] | Strom [µA] | Abscheidequote [%] |
|---|---|---|
| 3 | 4,2 | 43 |
| 5 | 5,6 | 49 |

## Patentansprüche

1. Verwendung von schichtartigen Doppelhydroxid-Salzen als Ladungssteuermittel in elektrophotographischen Tonern und Entwicklern, in Pulverlacken, Elektretmaterialien und in elektrostatischen Trennvorgängen von aufladbaren Materialien, **dadurch gekennzeichnet, dass** das Doppelhydroxid-Salz einwertige und/oder zweiwertige sowie dreiwertige Metallkationen, sowie ein oder mehrere organische Anionen A aus der Gruppe Benzilsäure, der Naphthalindisulfonsäuren, der Naphthalindicarbonsäuren, der Hydroxynaphthoesäuren, Octandicarbonsäure, Decandicarbonsäure, Dodecandicarbonsäure, Tetradecandicarbonsäure, Hexadecandicarbonsäure, Octadecandicarbonsäure, Naphthalintetracarbonsäure, Sulfobernsteinsäure-(C₆-C₂₀)-Alkylmonoester und Sulfobernsteinsäure-(C₆-C₂₂)-Fluoralkylmonoester enthält.

2. Verwendung nach Anspruch 1, **dadurch gekennzeichnet, dass** die Anzahl der Hydroxygruppen des Doppelhydroxid-Salzes das 1,8 bis 2,2-fache der Summe aller Metallkationen beträgt.

3. Verwendung nach Anspruch 1 oder 2, **dadurch gekennzeichnet, dass** als einwertige Metallkationen solche aus der Gruppe Li⁺, Na⁺ und K⁺, als zweiwertige Metallkationen solche aus der Gruppe Mg²⁺, Ca²⁺, Zn²⁺, Co²⁺, Ni²⁺, Fe²⁺, Cu²⁺ und Mn²⁺ , und als dreiwertige Metallkationen solche aus der Gruppe Al³⁺, Fe³⁺, Co³⁺, Mn³⁺, Ni³⁺, Cr³⁺ sowie B³⁺ enthalten sind.

4. Verwendung nach einem oder mehreren der Ansprüche 1 bis 3, **dadurch gekennzeichnet, dass** die Doppelhydroxid-Salze Mg²⁺ und Al³⁺ enthalten.

5. Verwendung nach Anspruch 4, **dadurch gekennzeichnet, dass** das molare Verhältnis Mg²⁺ : Al³⁺ 3,1:1 bis 1:2 beträgt.

6. Verwendung nach mindestens einem der Ansprüche 1 bis 5 6, **dadurch gekennzeichnet, dass** ein Teil der organischen Anionen A durch andere organische Anionen A' ersetzt ist, wobei A' ein Anion einer C₁₂-C₄₄-Fettsäure, insbesondere Stearinsäure, ist.

7. Verwendung nach mindestens einem der Ansprüche 1 bis 6 in Kombination mit einem oder mehreren weiteren Ladungssteuermitteln aus der Gruppe der Triphenylmethane; Ammonium- und Immoniumverbindungen, Iminiumverbindungen; fluorierten Ammonium- und fluorierten lmmoniumverbindungen; biskationischen Säureamide; polymeren Ammoniumverbindungen; Diallylammoniumverbindungen; Arylsulfid-Derivate, Phenolderivate; Phosphoniumverbindungen und fluorierten Phosphoniumverbindungen; Calix(n)arene, ringförmig verknüpften Oligosaccharide (Cyclodextrine), Interpolyelektrolytkomplexe (IPECs); Polyestersalze; Metallkomplexverbindungen, Salze ionischer Struktursilikate, Hydroxycarbonsäure-Metall-Komplexe und Hydroxycarbonsäure-Nichtmetallkomplexe, Benzimidazolone; Azine, Thiazine oder Oxazine, die im Colour Index als Pigments, Solvent Dyes, Basic Dyes oder Acid Dyes aufgeführt sind.

8. Verwendung nach mindestens einem der Ansprüche 1 bis 6 in einer Konzentration von 0,01 bis 50 Gew.-%, bezogen auf das Gesamtgewicht des Toners, Entwicklers, Lacks, Pulverlacks, Elektretmaterials oder der elektrostatisch zu trennenden Materialien.

9. Elektrophotographischer Toner, Pulver oder Pulverlack, enthaltend 30 bis 99,99 Gew.-% eines Bindemittels, 0,01 bis 50 Gew.-% mindestens eines schichtartigen Doppelhydroxid-Salzes gemäß Ansprüchen 1 bis 6 und gegebenenfalls 0,001 bis 50 Gew.-% eines Farbmittels, jeweils bezogen auf das Gesamtgewicht des elektrophotographischen Toners, Pulvers oder Pulverlacks.

10. Magnesium-Aluminium-Hydroxid-Carbonat mit einem Verhältnis von Mg zu Al von 1,9:1 bis 3,1:1, welches Anionen in folgenden Mengenverhältnissen, jeweils bezogen auf das Gesamtgewicht des Mg-Al-Hydroxidcarbonats, enthält: 1 bis 45 Gew.-% einer Kombination aus Sebacinsäure und einer C₁₂-C₄₄-Fettsäure oder eines teil- oder perfluorierten Sulfobernsteinsäure(C₆-C₂₂)alkylmonoesters, wobei das Verhältnis zwischen Sebacinsäure und der Fettsäure oder des Sulfobernsteinsäuremonoesters 1 : 50 bis 5 : 1 ist, oder 0,5 bis 70 Gew.-% eines teil- oder perfluorierten Sulfobernsteinsäure-(C₆-C₂₂)-alkylmonoesters.

11. Magnesium-Aluminium-Hydroxid-Carbonat nach Anspruch 10, **gekennzeichnet durch** eine der Formeln
Mg₆Al₂(OH)₁₆(CO₃)_{b} Zₐ x n H₂O
oder
Mg₄Al₂(OH)₁₂(CO₃)_{b} Za x n H₂O
wobei b 1 ist, n Null bis 10 ist, Z eine Kombination von Anionen der Sebacinsäure und Anionen einer oder mehrerer C₁₂-C₄₄-Fettsäuren, insbesondere Stearinsäure, ist und die Zahl a so bemessen ist, dass Z 0,5 bis 50 Gew.-%, bevorzugt 1 bis 45 Gew.-%, bezogen auf das Gesamtgewicht der Verbindung, ausmacht.

## Claims

1. The use of layered double hydroxide salts as charge control agents in electrophotographic toners and developers, in powder coating materials, electret materials and in electrostatic separation processes of chargeable materials, wherein the double hydroxide salt contains monovalent and/or divalent and also trivalent metal cations, and also contains one or more organic anions A from the group consisting of benzilic acid, naphthalenedisulfonic acids, naphthalenedicarboxylic acids, hydroxynaphthoic acids, octanedicarboxylic acid, decanedicarboxylic acid, dodecanedicarboxylic acid, tetradecanedicarboxylic acid, hexadecanedicarboxylic acid, octadecanedicarboxylic acid, naphthalenetetracarboxylic acid, sulfosuccinic acid (C₆-C₂₀)-alkyl monoesters and sulfosuccinic acid (C₆-C₂₂) - fluoroalkyl monoesters.

2. The use as claimed in claim 1, wherein the number of hydroxyl groups in the double hydroxide salt is from 1.8 to 2.2 times the sum of all the metal cations.

3. The use as claimed in claim 1 or 2, wherein monovalent metal cations present are those from the group Li⁺, Na⁺ and K⁺, divalent metal cations present are those from the group Mg²⁺, Ca²⁺, Zn²⁺, Co²⁺, Ni²⁺, Fe²⁺, Cu²⁺ and Mn²⁺ , and trivalent metal cations present are those from the group Al³⁺, Fe³⁺, Co³⁺, Mn³⁺, Ni³⁺, Cr³⁺ and B³⁺.

4. The use as claimed in one or more of claims 1 to 3, wherein the double hydroxide salts contain Mg²⁺ and Al³⁺.

5. The use as claimed in claim 4, wherein the molar ratio Mg²⁺ : Al³⁺ is from 3.1:1 to 1:2.

6. The use as claimed in at least one of claims 1 to 5, wherein some of the organic anions A are replaced by other organic anions A', A' being an anion of a C₁₂-C₄₄ fatty acid, especially stearic acid.

7. The use as claimed in at least one of claims 1 to 6 in combination with one or more further charge control agents from the group of triphenylmethanes; ammonium and immonium compounds, iminium compounds; fluorinated ammonium and fluorinated immonium compounds; biscationic acid amides; polymeric ammonium compounds; diallylammonium compounds; aryl sulfide derivatives, phenol derivatives; phosphonium compounds and fluorinated phosphonium compounds; calix[n]arenes, cyclically linked oligosaccharides (cyclodextrins), interpolyelectrolyte complexes (IPECs) ; polyester salts; metal complex compounds, salts of ionic structured silicates, hydroxycarboxylic acid-metal complexes and hydroxycarboxylic acid-nonmetal complexes, benzimidazolones; azines, thiazines or oxazines, which are listed in the Colour Index as Pigments, Solvent Dyes, Basic Dyes or Acid Dyes.

8. The use as claimed in at least one of claims 1 to 6 in a concentration of from 0.01% to 50% by weight, based on the total weight of the toner, developer, coating material, powdercoating material, electret material or materials for electrostatic separation.

9. An electrophotographic toner, powder or powdercoating material, containing from 30% to 99.99% by weight of a binder, from 0.01% to 50% by weight of at least one layered double hydroxide salt as set forth in claims 1 to 6, and, if desired, from 0.001% to 50% by weight of a colorant, based in each case on the total weight of the electrophotographic toner, powder or powdercoating material.

10. A magnesium-aluminum hydroxide carbonate having an Mg to A1 ratio of from 1.9:1 to 3.1:1, containing anions in the following proportions, based in each case on the total weight of the Mg-Al hydroxide carbonate: from 1% to 45% by weight of a combination of sebacic acid and a C₁₂-C₄₄ fatty acid or of a partly fluorinated or perfluorinated sulfosuccinic acid (C₆-C₂₂) alkyl monoester, the ratio between sebacic acid and the fatty acid or the sulfosuccinic acid monoester being from 1:50 to 5:1, or from 0.5% to 70% by weight of a partly fluorinated or perfluorinated sulfosuccinic acid (C₆-C₂₂) alkyl monoester.

11. The magnesium-aluminum hydroxide carbonate as claimed in claim 10, **characterized by** one of the formulae
Mg₆Al₂(OH)₁₆(CO₃)_{b} Za x n H₂O
or
Mg₄Al₂(OH)₁₂(CO₃)_{b} Za x n H₂O,
where b is 1, n is zero to 10, Z is a combination of anions of sebacic acid and anions of one or more C₁₂-C₄₄ fatty acids, especially stearic acid, and the number a is such that Z accounts for from 0.5% to 50% by weight, preferably from 1% to 45% by weight, based on the total weight of the compound.

## Revendications

1. Utilisation de sels hydroxydes doubles lamellaires comme agents de régulation de la charge dans des toners et révélateurs électrophotographiques, des peintures en poudre, des matériaux d'électrets et dans des mécanismes de séparation électrostatique de matériaux susceptibles d'être chargés, **caractérisée en ce que**, le sel hydroxyde double contient des cations métalliques monovalents et/ou divalents ou trivalents, ainsi qu'un ou plusieurs anions organiques A du groupe de l'acide benzilique, des acides naphtalènedisulfoniques, des acides naphtalène-dicarboxyliques, des acides hydroxynapthoïques, de l'acide octanedicarboxylique, l'acide décane-dicarboxylique, l'acide dodécanedicarboxylique, l'acide tétradécanedicarboxylique, l'acide hexadécane-dicarboxylique, l'acide octadécanedicarboxylique, l'acide naphtalènetétracarboxylique, les monoesters alkyliques en C₆ à C₂₀ de l'acide sulfosuccinique et les monoesters fluoroalkyliques en C₆ à C₂₂ de l'acide sulfosuccinique.

2. Utilisation selon la revendication 1, **caractérisée en ce que**, le nombre de groupes hydroxy du sel hydroxyde double s'élève à 1, 8 à 2,2 fois la somme de tous les cations métalliques.

3. Utilisation selon la revendication 1 ou 2, **caractérisée en ce que**, le sel contient comme cations métalliques monovalents ceux du groupe Li⁺, Na⁺ et K⁺, comme cations métalliques divalents ceux du groupe Mg²⁺, Ca²⁺, Zn²⁺, Co²⁺, Ni²⁺, Fe²⁺, Cu²⁺ et Mn²⁺, et comme cations trivalents ceux du groupe Al³⁺, Fe³⁺, Co³⁺, Mn³⁺, Ni³⁺, Cr³⁺ et B³⁺.

4. Utilisation selon une ou plusieurs des revendications 1 à 3, **caractérisée en ce que**, les sels hydroxydes doubles contiennent Mg²⁺ et Al³⁺.

5. Utilisation selon la revendication 4, **caractérisée en ce que**, le rapport molaire Mg²⁺:Al³⁺ s'élève à entre 3,1:1 et 1:2.

6. Utilisation selon au moins l'une des revendications 1 à 5, **caractérisée en ce que**, une partie des anions organiques A est remplacée par d'autres anions organiques A', dans laquelle A' est un anion d'un acide gras en C₁₂ à C₄₄, en particulier l'acide stéarique.

7. Utilisation selon au moins l'une des revendications 1 à 6 en combinaison avec un ou plusieurs autres agents de régulation de la charge du groupe du triphénylméthane ; des composés d'ammonium et d'immonium, des composés d'iminium ; des composés d'ammonium fluoré et d'immonium fluoré ; des amides d'acide biscationiques ; des composés d'ammonium polymères ; des composés diallylammonium ; des dérivés de sulfure d'aryle, des dérivés phénol ; des composés phosphonium et composés phosphonium fluorés ; des calix(n)arènes, des oligosaccharides reliés en forme de cycle (cyclodextrines), des complexes interpoly-électrolytes (IPEC) ; des sels de polyester ; des composés de complexes de métaux, des sels de silicates de structure ioniques, des complexes métalliques d'acide hydroxycarboxylique et des complexes de non-métaux d'acide hydroxycarboxylique, de la benzimidazolone ; de l'azine, la thiazine ou l'oxazine, qui sont présentés dans le Colour Index comme pigments, colorants avec solvants, colorants basiques ou colorants acides.

8. Utilisation selon au moins l'une des revendications 1 à 6 à une concentration de 0,01 à 50 % en poids par rapport au poids total du toner, révélateur, laque, peinture en poudre, matériau d'électret et/ou des matériaux à séparer électrostatiquement.

9. Toner, poudre ou peinture en poudre électrophotographique, contenant 30 à 99,99% en poids d'un liant, 0,01 à 50 % en poids d'au moins un sel hydroxyde double lamellaire selon les revendications 1 à 6, et éventuellement 0,001 à 50 % en poids d'un colorant, respectivement par rapport au poids total du toner, poudre ou peinture en poudre électrophotographique.

10. Carbonate-hydroxyde de magnésium-aluminium avec un rapport de Mg sur Al de 1,9:1 à 3,1:1, lequel contient des anions dans les rapports en quantité suivants, respectivement par rapport au poids total du carbonate-hydroxyde de magnésium-aluminium : 1 à 45 % en poids d'une combinaison d'acide sébacique et d'un acide gras en C₁₂ à C₄₄ ou d'un monoester alkylique en C₆ à C₂₂ de l'acide sulfosuccinique partiellement fluoré ou perfluoré, dans lequel le rapport entre l'acide sébacique et l'acide gras ou le monoester alkylique de l'acide sulfosuccinique est de 1:50 à 5:1, ou 0,5 à 70 % en poids d'un monoester alkylique en C₆ à C₂₂ de l'acide sulfosuccinique partiellement fluoré ou perfluoré.

11. Carbonate-hydroxyde de magnésium-aluminium selon la revendication 10, **caractérisé par** une des formules
Mg₆Al₂(OH)₁₆(CO₃)_{b}Zₐ x n H₂O
ou
Mg₄Al₂(OH)₁₂(CO₃)_{b}Zₐ x n H₂O
dans lesquelles b est 1, n est zéro à 10, Z une combinaison d'anions de l'acide sébacique et d'anions d'un ou plusieurs acides gras en C₁₂ à C₄₄, en particulier l'acide stéarique, et le nombre a est dimensionné de sorte que Z représente de 0,5 à 50 % en poids, de préférence de 1 à 45 % en poids, par rapport au poids total du composé.
